(19) **Europäisches Patentamt** / **European Patent Office** / **Office européen des brevets**

(11) **EP 1 871 023 B1**

(12) **EUROPEAN PATENT SPECIFICATION**

(45) Date of publication and mention
of the grant of the patent:
**17.12.2008   Bulletin 2008/51**

(51) Int Cl.:
*H04B 17/00* (2006.01)   *H04L 1/00* (2006.01)

(21) Application number: **06291044.3**

(22) Date of filing: **23.06.2006**

(54) **Method and device for controlling channel state information transferred by a first telecommunication device to a second telecommunication device**

Verfahren und Vorrichtung zur Bestimmung von Kanalzustandsinformationen welche von einer ersten zu einer zweiten Telekommunikationsvorrichtung zu übertragen sind

Procédé et dispositif pour déterminer des informations d'etat du canal à transmettre d'un premier à un deuxième dispositif de télécommunication

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**26.12.2007   Bulletin 2007/52**

(73) Proprietors:
- **Mitsubishi Electric Information Technology Centre Europe B.V.**
  **1119 NS  Schiphol Rijk (NL)**
- **MITSUBISHI DENKI KABUSHIKI KAISHA**
  **Chiyoda-ku, Tokyo 100-8310 (JP)**

(72) Inventor: **Hara, Yoshitaka,**
**Mitsubishi Electric ITE**
**35708 Rennes Cedex 7 (FR)**

(74) Representative: **Maillet, Alain**
**Cabinet Le Guen & Maillet**
**5, place Newquay**
**B.P. 70250**
**35802 Dinard Cedex (FR)**

(56) References cited:
WO-A-20/04073200   US-A1- 2003 161 282
US-A1- 2005 002 468   US-A1- 2005 181 739
US-B1- 6 473 467

**Description**

The present invention relates generally to telecommunication systems and in particular, to methods and devices for controlling channel state information transferred by a first telecommunication device to a second telecommunication device.

Recently, efficient transmission schemes in space and frequency domains have been investigated to meet the growing demand for high data rate wireless telecommunications. In the space domain, Multi-Input Multi-Output (MIMO) systems using multiple antennas at both transmitter and receiver sides have gained attention to exploit the potential increase of the spectral efficiency.

In some transmission schemes using MIMO systems, the telecommunication device which transmits data streams has some knowledge of the channel conditions which exist between itself and the telecommunication devices to which the data streams are transferred. The telecommunication device directs the signals transferred to a telecommunication device according to the channel conditions, and then improves the overall performances of the system.

Practically, when the channels responses between uplink and downlink channels are reciprocal, e.g. in Time Division Multiplex systems, the channel conditions are obtained according to the following method : a telecommunication device like a base station transfers pilot signals to another telecommunication device like a mobile terminal, the mobile terminal receives the pilot signals, determines the channel responses from the received pilot signals, as example under the form of a channel matrix which is representative of the channel conditions, and uses the determined matrix in order to direct the signals which have to be transferred to the base station which has sent the pilot signals.

The coefficients of the determined channel matrix are the complex propagation gains between the antennas of the base station and the antennas of the mobile terminal.

Some of the complex propagation gains reflect poor channel propagation conditions which exist between some antennas of the base station and the mobile terminal.

If an important number of mobile terminals report all coefficients of the determined channel matrix to the base station, the transfer of these coefficients requires an important part of the available bandwidth of the overall wireless telecommunication network and the base station needs to have important calculation means in order to treat all these coefficient.

Other channel conditions measurements can also be determined. The channel conditions are as example the Signal to Interference plus Noise Ratio measured by the mobile terminal.

If an important number of mobile terminals report all the Signal to Interference plus Noise Ratio, the transfer of these data requires an important part of the available bandwidth of the overall wireless telecommunication network and the base station needs to have important calculation means in order to treat all these coefficient.

Patent application US 2005/181739 teaches an adaptive MIMO system in which one of a full feedback mode and a limited feedback mode is selected depending on the expected receiver performance. Full feedback involves reporting of the coefficients of the MIMO channel from the mobile to the base station, while for limited feedback only the channel's signal-to-interference ratio SINR is reported back. The decision as to which mode to use is based for instance on the measured SINR at the mobile, its speed, its number of receive antennas and its supportable data rate.

Application WO 2004/073200 discloses an OFDM system in which the uplink reporting of channel state information (CSI) is activated or deactivated according to a corresponding flag signalled from the base station on the downlink.

Both applications seek to solve the technical problem of enabling the reporting of the channel conditions without requiring an important part of the available bandwidth of the overall wireless telecommunications network.

The aim of the present invention is to propose methods and devices which provide an alternative solution for this problem.

To that end, the present invention concerns a method for controlling channel state information transferred by a first telecommunication device to a second telecommunication device, the first telecommunication device determining information representative of the quality of the signals transferred between the first and second telecommunication devices, characterised in that the method comprises the steps executed by the second telecommunication device of :

- determining a number of information representative of the quality of the signals transferred between the first and second telecommunication devices the first telecommunication device has to report as a channel state information,
- transferring the determined number to the first telecommunication device.

The present invention concerns also a device for controlling channel state information transferred by a first telecommunication device to a second telecommunication device, the first telecommunication device determining information representative of the quality of the signals transferred between the first and second telecommunication devices, characterised in that the device for controlling is included in the second telecommunication device and comprises :

- means for determining a number of information representative of the quality of the signals transferred between the

**EP 1 871 023 B1**

first and second telecommunication devices the first telecommunication device has to report as a channel state information,

- means for transferring the determined number to the first telecommunication device.

Thus, the second telecommunication device is able to control the quantity of information representative of the quality of the signals transferred between the first and second telecommunication devices.

According to a particular feature, the number of information representative of the quality of the signals transferred between the first and second telecommunication devices the first telecommunication device has to report is lower than the number of the determined information representative of the quality of the signals transferred between the first and second telecommunication devices.

Thus, the part of the available bandwidth of the overall wireless telecommunication network used for the receiving the channel state information is reduced.

According to a particular feature, the second telecommunication device allocates to the first telecommunication device a number of pilot signals which is equal to the determined number.

Thus, the available pilot signals are used efficiently.

According to a particular feature, the second telecommunication device receives the channel state information from the first telecommunication device and controls the transfer of the signals representative of at least a group of data between the first and the second telecommunication devices according to received the channel state information.

Thus, it is possible to allocate the resources of the network in an efficient way.

According to a particular feature, the second telecommunication device determines the number of first telecommunication devices which are linked to the second telecommunication device.

A first telecommunication device is linked to the second telecommunication device when it can transfer signals to the second telecommunication device and receive signals from the second telecommunication device.

According to a particular feature, the number of information representative of the quality of the signals transferred between the first and second telecommunication devices the first telecommunication device has to report as a channel state information is determined according to the number of first telecommunication devices which are linked to the second telecommunication device.

Thus, the second telecommunication device allocates the resources of the network among the first telecommunication fairly.

According to a particular feature, the second telecommunication device receives the number of antennas each first telecommunication device comprises and determines the number of information representative of the quality of the signals transferred between the first and second telecommunication devices each first telecommunication device has to report as a channel state information according to the number of antennas the first telecommunication device comprises.

Thus, the second telecommunication device allocates the resources of the network among the first telecommunication according to their communication capabilities.

According to a particular feature, the second telecommunication device receives from each first telecommunication device their respective requirement in term of data rate and determines the number of information representative of the quality of the signals transferred between the first and second telecommunication devices each first telecommunication device has to report as a channel state information according to the requirements in term of data rate.

Thus, the second telecommunication device allocates the resources of the network among the first telecommunication according to their communication needs.

According to a particular feature, the second telecommunication device receives from each first telecommunication device, their respective requirement in term of response delay and the number of information representative of the quality of the signals transferred between the first and second telecommunication devices each first telecommunication device has to report as a channel state information is determined according to the requirements in term of response delay.

Thus, the second telecommunication device allocates the resources of the network among the first telecommunication according to their communication needs.

According to still another aspect, the present invention concerns a method for transferring, by a first telecommunication device, channel state information to a second telecommunication device, the first telecommunication device determining information representative of the quality of the signals transferred between the first and second telecommunication devices, characterised in that the method comprises the steps executed by the first telecommunication device of :

- receiving from the second telecommunication device a number of information representative of the quality of the signals transferred between the first and second telecommunication devices the first telecommunication device has to report as a channel state information,

- determining a channel state information which comprises the received number of information representative of the quality of the signals transferred between the first and second telecommunication devices,
- transferring the channel state information to the second telecommunication device.

The present invention concerns also a first telecommunication device which transfers channel state information to a second telecommunication device, the first telecommunication device determining information representative of the quality of the signals transferred between the first and second telecommunication devices, characterised in that the first telecommunication device comprises :

- means for receiving from the second telecommunication device a number of information representative of the quality of the signals transferred between the first and second telecommunication devices the first telecommunication device has to report as a channel state information,
- means for determining a channel state information which comprises the received number of information representative of the quality of the signals transferred between the first and second telecommunication devices,
- means for transferring the channel state information to the second telecommunication device.

Thus, the quantity of information representative of the quality of the signals transferred between the first and second telecommunication devices is reduced.

According to a particular feature, the first telecommunication device comprises antennas and the second telecommunication device which comprises antennas and in that the quality of the signals transferred between the first and second telecommunication devices is the propagation gain between one antenna of the first telecommunication devices and one antenna of the second telecommunication device.

Thus, the second telecommunication device is informed about the propagation gains which are determined by the first telecommunication device.

According to a particular feature, the propagations gains are coefficients of a downlink channel matrix and the measured information representative of the quality of the signals transferred between the first and second telecommunication devices comprised in the channel state information are determined by executing a singular value decomposition of the downlink channel matrix.

Thus, the second telecommunication device is informed about the propagation gains which are determined by the first telecommunication device in the downlink channel.

According to a particular feature, the propagations gains are coefficients of an uplink channel matrix and the determined information representative of the quality of the signals transferred between the first and second telecommunication devices comprised in the channel state information are determined by executing a singular value decomposition of the uplink channel matrix.

Thus, the second telecommunication device is informed about the propagation gains which are determined by the first telecommunication device in the uplink channel.

According to still another aspect, the present invention concerns computer programs which can be directly loaded into a programmable device, comprising instructions or portions of code for implementing the steps of the methods according to the invention, when said computer programs are executed on said programmable device.

Since the features and advantages relating to the computer programs are the same as those set out above related to the methods and devices according to the invention, they will not be repeated here.

According to still another aspect, the present invention concerns a signal transferred to a second telecommunication device from a first telecommunication device, characterised in that the signal comprises a number of information representative of the quality of the signals transferred between the first and second telecommunication devices the second telecommunication device has to report as a channel state information to the first telecommunication device.

Since the features and advantages relating to the signal are the same as those set out above related to the methods and devices according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of the wireless network according to the present invention ;
Fig. 2 is a diagram representing the architecture of a first telecommunication device according to the present invention;
Fig. 3a is a diagram representing the architecture of a channel interface according to a first mode of realisation of the first telecommunication device;
Fig. 3b is a diagram representing the architecture of a channel interface according to a second mode of realisation of the first telecommunication device;
Fig. 3c is a diagram representing the architecture of a channel interface according to a third mode of realisation of the first telecommunication device;

Fig. 4 is a diagram representing the architecture of the second telecommunication device according to the present invention;

Fig. 5 is an algorithm executed by the second telecommunication device according to a first mode of realisation of the second telecommunication device;

Fig. 6 is an algorithm executed by the second telecommunication device according to a second mode of realisation of the second telecommunication device;

Fig. 7 is an algorithm executed by the second telecommunication device according to a third mode of realisation of the second telecommunication device;

Fig. 8 is an algorithm executed by the second telecommunication device according to a fourth mode of realisation of the second telecommunication device;

Fig. 9 is an algorithm executed by the first telecommunication device according to the first mode of realisation of the first telecommunication device;

Fig. 10 is an algorithm executed by the first telecommunication device according to the second mode of realisation of the first telecommunication device;

Fig. 11 is an algorithm executed by the first telecommunication device according to the third mode of realisation of the first telecommunication device;

Fig. 12 is an example of the channel state information transferred by a first telecommunication device according to the third mode of realisation of the first telecommunication device.

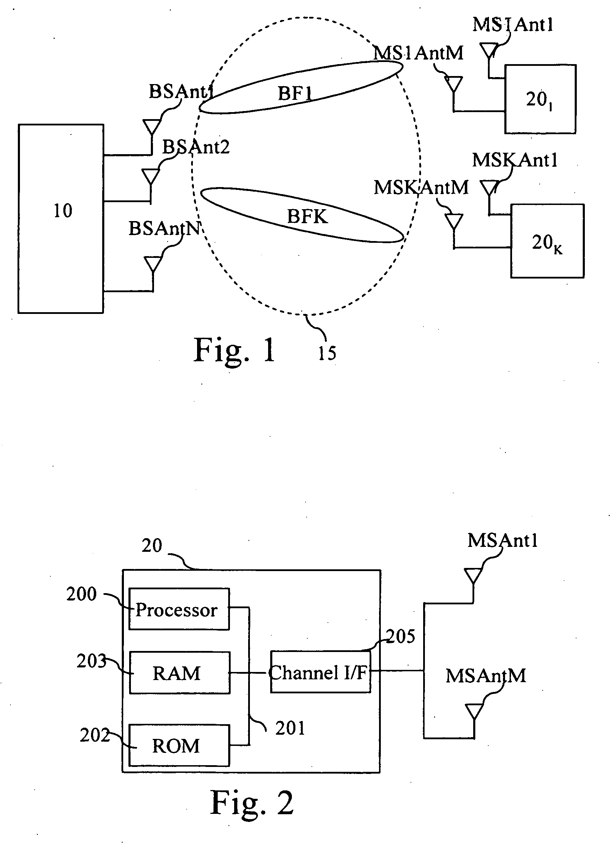

**Fig. 1** is a diagram representing the architecture of the wireless network according to present invention.

In the wireless network of the Fig. 1, at least one and preferably plural first telecommunication devices $20_1$ or $20_K$ are linked through a wireless network 15 to a second telecommunication device 10 using an uplink and a downlink channel.

Preferably, and in a non limitative way, the second telecommunication device 10 is a base station or a node of the wireless network 15. The first telecommunication devices $20_l$ to $20_K$ are terminals like mobile phones, personal digital assistants, or personal computers.

The telecommunication network 15 is a wireless telecommunication system which uses Time Division Duplexing scheme (TDD) or Frequency Division Duplexing scheme (FDD).

In TDD scheme, the signals transferred in uplink and downlink channels are duplexed in different time periods in the same frequency band. The signals transferred within the wireless network 15 share the same frequency spectrum. The channel responses between the uplink and downlink channels of the telecommunication network 15 are reciprocal.

Reciprocal means that if the downlink channel conditions are represented by a downlink matrix, the uplink channel conditions can be expressed by an uplink matrix which is the transpose of the downlink matrix.

In FDD scheme, the signals transferred in uplink and downlink channels are duplexed in different frequency bands. The spectrum is divided into different frequency bands and the uplink and downlink signals are transmitted simultaneously. The channel responses between the uplink and downlink channels of the telecommunication network 15 are not perfectly reciprocal.

The second telecommunication device 10 transfers simultaneously signals representatives of at most $N$ groups of data or pilot signals to the first telecommunication devices $20_1$ to $20_K$ through the downlink channel and the first telecommunication devices $20_1$ to $20_K$ transfer signals to the second telecommunication device 10 through the uplink channel.

The signals transferred by the first telecommunication devices $20_1$ to $20_K$ are signals representatives of a group of data or pilot signals.

A group of data is as example a frame constituted at least by a header field and a payload field which comprises classical data like data related to a phone call, or a video transfer and so on.

Pilot signals are predetermined sequences of symbols known by the telecommunication devices. Pilot signals are, as example and in a non limitative way, Walsh Hadamard sequences.

According to the first mode of realisation of the first telecommunication device 20, the pilot signals transferred by the first telecommunication devices $20_1$ to $20_K$ are multiplied by a downlink linear transform. The transferred pilot signals comprise then channel state information.

According to the second mode of realisation of the first telecommunication device 20, the pilot signals transferred by the first telecommunication devices $20_1$ to $20_K$ are multiplied by an uplink linear transform. The transferred pilot signals comprise then channel state information.

According to the third mode of realisation of the first telecommunication device 20, the channel state information is transferred into the form of bit information.

The second telecommunication device 10 has $N$ antennas noted BSAnt1 to BSAntN. The second telecommunication device 10 preferably controls the spatial direction of the signals transferred to each first telecommunication devices $20_1$ to $20_K$ according to the channel state information transferred by each first telecommunication devices 20 as it will be disclosed hereinafter.

More precisely, when the second telecommunication device 10 transmits signals representatives of a group of data to a given first telecommunication device $20_k$ through the downlink channel, the signals are at most $N$ times duplicated in order to perform beamforming, i.e. controls the spatial direction of the transmitted signals.

The ellipse noted BF1 in the Fig. 1 shows the pattern of the radiated signals by the antennas BSAnt1 to BSAntN which are transferred to the first telecommunication device $20_1$ by the second telecommunication device 10.

The ellipse noted BFK in the Fig. 1 shows the pattern of the radiated signals by the antennas BSAnt1 to BSAntN which are transferred to the first telecommunication device $20_K$ by the second telecommunication device 10.

The first telecommunication devices $20_1$ to $20_K$ have $M_k$ antennas noted respectively MS1Ant1 to MS1AntM$_1$ and MSKAnt1 to MSKAntM$_k$. It has to be noted here that the number $M_k$ of antennas may vary according to each first telecommunication device $20_k$ with $k$=1 to $K$. Each first telecommunication device $20_1$ to $20_k$ controls the spatial direction of the signals transferred to the second telecommunication device 10 as it will be disclosed hereinafter.

Each first telecommunication device $20_l$ to $20_k$ controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

The ellipse noted BF 1 in the Fig. 1 shows the pattern of the radiated signals by the antennas MS1Ant1 to MS1AntM$_1$ which are transferred by the first telecommunication device $20_1$ to the second telecommunication device 10.

The ellipse noted BFK in the Fig. 1 shows the pattern of the radiated signals by the antennas MSKAnt1 to MSKAntM$_K$ which are transferred by the first telecommunication device $20_K$ to the second telecommunication device 10.

According to the third mode of realisation of the first telecommunication device 20, each first telecommunication device $20_1$ to $20_k$ controls the spatial direction of the signals received from the second telecommunication device 10 in order to perform beamforming, i.e. controls the spatial direction of the received signals.

The second telecommunication device 10 determines, for each first telecommunication device $20_k$, the number of information representative of the quality of the signal transferred between the first and second telecommunication device each first telecommunication device $20_k$ has to report as a the channel state information between.

Each first telecommunication device $20_k$ receives from the second telecommunication device 10 a number of information representative of the quality of the signals transferred between the first and second telecommunication devices the first telecommunication device has to report as a channel state information.

**Fig. 2** is a diagram representing the architecture of a first telecommunication device according to the present invention.

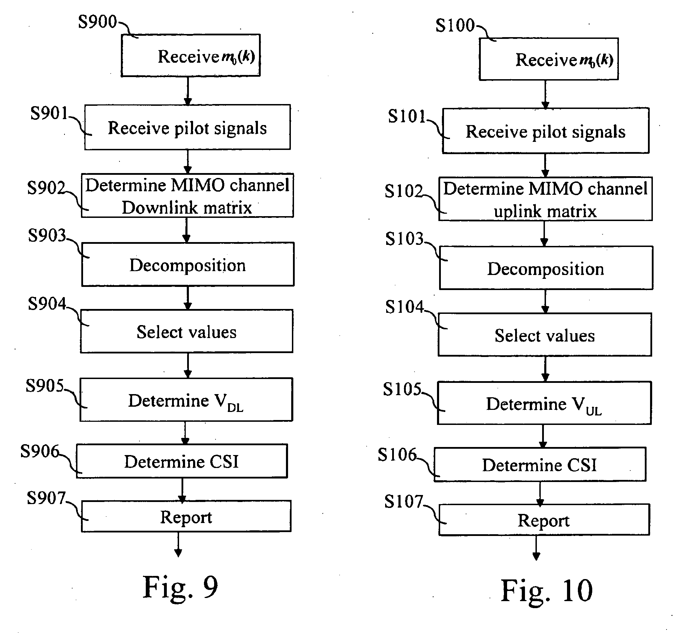

The first telecommunication device 20, as example the first telecommunication device $20_k$, with $k$ comprised between 1 and $K$, has, for example, an architecture based on components connected together by a bus 201 and a processor 200 controlled by programs related to the algorithm as disclosed in the Figs. 9 or 10 or 11.

It has to be noted here that the first telecommunication device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithm as disclosed in the Figs. 9 or 10 or 11 which are transferred, when the first telecommunication device $20_k$ is powered on to the random access memory RAM 203.

The RAM memory 203 contains registers intended to receive variables, and the instructions of the programs related to the algorithm as disclosed in the Figs. 9 or 10 or 11.

The channel interface 205 enables the transfer and/or of the reception of signals to and/or from the second telecommunication device 10.

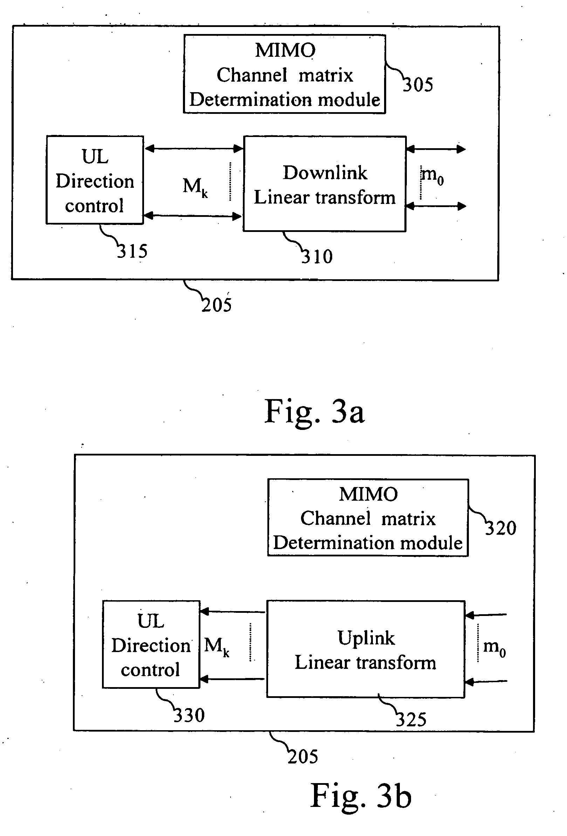

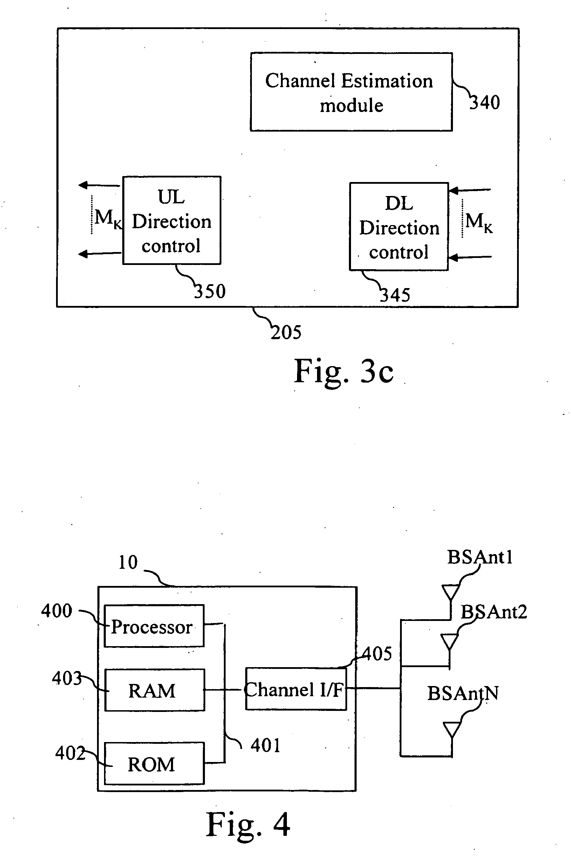

The channel interface 205 will be described in detail in reference to the Fig. 3a, Fig. 3b and Fig. 3c.

**Fig. 3a** is a diagram representing the architecture of a channel interface according to a first mode of realisation of the first telecommunication device.

According to the first mode of realisation of the first telecommunication device, the channel interface 205 comprises a MIMO channel matrix estimation module 305.

The MIMO channel matrix estimation module 305 receives the $M_k$* 1 signals $x_k(p)=H_{DL,k}s(p)+z_k(p)$, where, $s(p) = [s_1(p),...,s_N(p)]^T$ are signals representative of the $p$-th pilot symbol transferred by the second telecommunication device 10, $z_k(p)$ is the $M_k$*1 interference plus noise vector at the first telecommunication device $20_k$ and $H_{DL,k}$ is the $M_k$*N downlink MIMO channel matrix between the second telecommunication device 10 and first telecommunication device $20_k$.

The MIMO channel matrix estimation module 305 estimates the matrix $H_{DL,K}$.

Each element $(m,n)$ with $m$=1 to $M_k$ and $n$=1 to $N$ of the matrix $H_{DL,K}$ represents the complex propagation gain from the $n$-th antenna of the second telecommunication device 10 and the $m$-th of the first telecommunication device $20_k$.

The channel interface 205 comprises a downlink linear transform module 310 which comprises means for executing a linear transformation of the signal vector $x_k(p)$ using a $m_0 * M_k$ matrix $V_{DL}^T$.

Then, the linear transform yields the $m_0 * 1$ output vector :

$$x'(p) = V_{DL}^T x(p)$$

$$x'(p) = V_{DL}^T H_{DL,k} s(p) + z_k(p)'$$

where $V_{DL}^T = [v_{DL,1}, ..., v_{DL,m_0}]$ and $z_k(p)' = V_{DL}^T z_k(p)$.

The dimension of the downlink linear transform matrix $V_{DL}^T$ is defined according to the number of information representative of the quality of the signals transferred between the first and second telecommunication devices that the first telecommunication device $20_k$ has to report as a channel state information.

The downlink linear transform matrix $V_{DL}^T$ is also defined, as it will be disclosed hereinafter, so that the first telecommunication device $20_k$ has good channel conditions at the output $x'(p)$.

The downlink linear transform module 310 executes a linear transform on the signals received by the first telecommunication device. The downlink linear transform module 310 executes a linear transform on the $m_0$ pilot signals transferred by the first telecommunication device $20_k$ to the second telecommunication device 10 which comprise then a channel state information.

Preferably and in a non limitative way, the channel interface 205 comprises an uplink direction control module 315 which controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

**Fig. 3b** is a diagram representing the architecture of a channel interface according to a second mode of realisation of the first telecommunication device.

According to the second mode of realisation of the first telecommunication device, the channel interface 205 comprises a MIMO channel matrix estimation module 320.

The MIMO channel matrix estimation module 320 estimates also the matrix $H_{UL,k}$ which is the $N*M_k$ uplink MIMO channel matrix between the first telecommunication device $20_k$ and the second telecommunication device 10.

Each element $(n,m)$ with $m=1$ to $M_k$ and $n=1$ to $N$ of the matrix $H_{UL,k}$ represents the complex propagation gain from the $m$-th antenna of the first telecommunication device $20_k$ and the $n$-th of the second telecommunication device 10.

Preferably the matrix $H_{UL,k}$ is equal to $H^T_{DL,k}$ where $[.]^T$ denotes the transpose of $[.]$.

The channel interface 205 comprises an uplink linear transform module 325 which comprises means for executing a linear transformation of $m_0$ signals $r(p) = [r'_1(p),..., r'_{m0}(p)]^T$ into the $M_k \times 1$ signal vector $r(p)$ using the $M_k \times m_0$ linear transformation matrix $V_{UL}$ as $r(p) = V_{UL}r(p)'$.

The dimension of the uplink linear transform matrix $V_{UL}$ is defined according to the number of information representative of the quality of the signals transferred between the first and second telecommunication devices that the first telecommunication device $20_k$ has to report as a channel state information

As it will be disclosed hereinafter, the uplink linear transform matrix $V_{UL}$ is also defined so that good channel conditions are maintained between the first telecommunication device $20_k$ and the second telecommunication device 10.

The uplink linear transform module 325 executes a linear transform on the signals representative of groups of data transferred by the first telecommunication device. The uplink linear transform module 305 executes a linear transform on the $m_0$ pilot signals transferred by the first telecommunication device $20_k$ to the second telecommunication device 10 which comprise then a channel state information.

Preferably and in a non limitative way, the channel interface 205 comprises an uplink direction control module 335 which controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

**Fig. 3c** is a diagram representing the architecture of a channel interface according to a third mode of realisation of the first telecommunication device.

According to the third mode of realisation of the first telecommunication device, the channel interface 205 comprises a channel estimation module 340.

The second telecommunication device 10 transfers $N$ pilot signals $s(p) = [s_1(p),...,s_N(p)]^T$ using fixed $N$ transmit beamforming based on the constant $N*1$ different weights $w_1,..., w_N$. The first telecommunication device $20_k$ receives a $M_k*1$ signal vector $x_k(p) = H_{DL,k} Ws(p) + z_k(p)$ with $W = [w_1,...w_N]$.

The channel interface 205 comprises an downlink direction control module 345 which controls the spatial direction of the signals received from the second telecommunication device 10.

The downlink direction control module 345 performs a downlink beamforming for each signal $s_1(p),..., s_N(p)$.

The downlink direction control module 345 uses $N$ weights $v_{kn}$ with $n=1$ to $N$ in order to perform the downlink beamforming.

Preferably, the weight $v_{kn}$ for the $n$-th signal is given by a Minimum Mean Squared Error (MMSE) weight $v_{kn}= \Phi^{-1}\alpha_n$

where $\Phi = \dfrac{1}{p_0}\sum_{p=1}^{p_0} x_k(p)x_k(p)^H$, $a_n = \dfrac{1}{p_0}\sum_{p=1}^{p_0} x_k(p)s_n(p)^*$, $p_0$ is the number of symbols of each pilot signal, $[\,]^H$ denotes the complex conjugate transpose and $[\,]^*$ denotes the complex conjugate.

From the output of the downlink direction control module 345, the channel estimation module 340 measures the downlink channel quality for each signal $s_1(p),..., s_N(p)$. Preferably and in a non limitative way, the downlink channel quality is the Signal to Interference plus Noise Ratio $\gamma_1$ to $\gamma_N$ determined respectively for each signal $s_1(p)$ to $s_N(p)$.

Preferably and in a non limitative way, the channel interface 205 comprises an uplink direction control module 350 which controls the spatial direction of the signals transferred to the second telecommunication device 10 by $M_k$ times duplicating the signals and weighting the duplicated signals by coefficients in order to perform beamforming, i.e. controls the spatial direction of the transmitted signals.

**Fig. 4** is a diagram representing the architecture of the second telecommunication device according to the present invention.

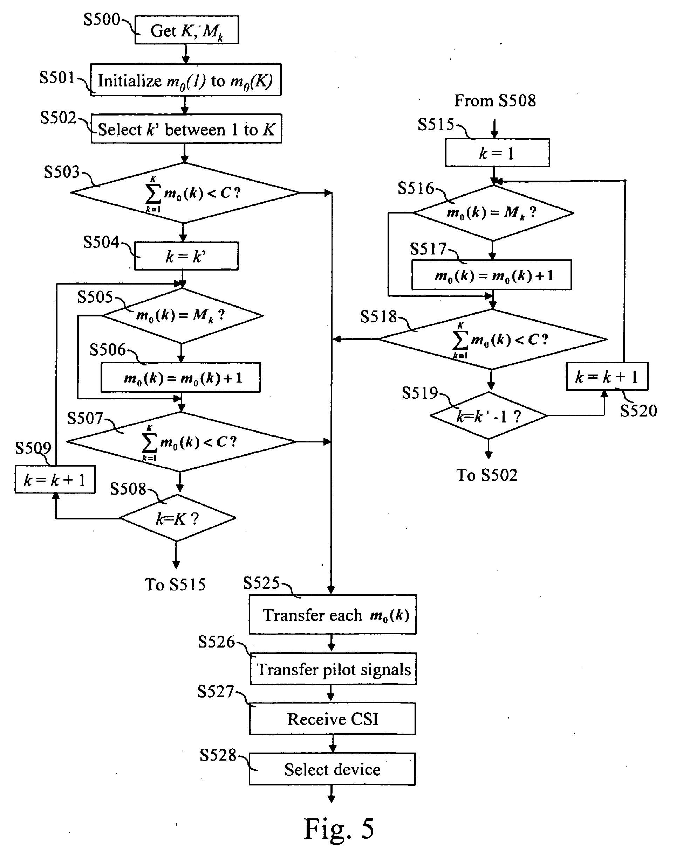

The second telecommunication device 10, has, for example, an architecture based on components connected together by a bus 401 and a processor 400 controlled by programs related to the algorithm as disclosed in the Figs. 5 to 8.

It has to be noted here that the second telecommunication device 10 is, in a variant, implemented under the form of one or several dedicated integrated circuits which execute the same operations as the one executed by the processor 400 as disclosed hereinafter.

The bus 401 links the processor 400 to a read only memory ROM 402, a random access memory RAM 403 and a channel interface 405.

The read only memory ROM 402 contains instructions of the programs related to the algorithm as disclosed in the Figs. 5 to 8 which are transferred, when the second telecommunication 10 is powered onto the random access memory RAM 403.

The RAM memory 403 contains registers intended to receive variables, and the instructions of the programs related to the algorithm as disclosed in the Figs. 5 to 8.

According to the present invention, the processor 400 determines, for each first telecommunication device $20_k$, the number of information representative of the quality of the signals transferred between the first and second telecommunication devices each first telecommunication device $20_k$ has to report as a channel state information

According to the present invention, the processor 400 is able to determine, for each first telecommunication device $20_1$ to $20_K$, from the channel state information transferred by each first telecommunication device $20_1$ to $20_K$, the modulation and coding scheme to be used by each first telecommunication device $20_k$ for receiving groups of data. The processor 400 is able to determine to which first telecommunication device 20, signals representative of a group of data have to be sent according to the channel state information transferred by the first telecommunication devices 20. The processor 400 determines for each first telecommunication device $20_1$ to $20_K$, from the channel state information transferred by each first telecommunication device $20_k$, the modulation and coding scheme to be used by each first telecommunication device $20_k$ for transferring groups of data or pilot signals and/or determines which first telecommunication device 20 has to transfer signals representative of a group of data to the second telecommunication devices 10.

Preferably and in a non limitative way, the channel interface 405 comprises a downlink direction control module, not shown in the Fig. 4, which controls the spatial direction of the signals transferred to each first telecommunication devices $20_1$ to $20_K$ by $N$ times duplicating the signals and weighting the duplicated signals by coefficients in order to perform beamforming, i.e. controls the spatial direction of the transmitted signals.

**Fig. 5** is an algorithm executed by the second telecommunication device according to a first mode of realisation of the second telecommunication device.

The present algorithm is executed each time a new first telecommunication device 20 is detected by the second telecommunication device 10 and/or periodically.

At step S500, the processor 400 of the second telecommunication device 10 receives from each first telecom-

munication device $20_1$ to $20_K$, through the uplink channel, information representative of the number of antennas each first telecommunication device $20_1$ to $20_K$ has. At the same step, the processor 400 determines the number $K$ of first telecommunication devices 20.

The processor 400 memorises the number of antennas $M_1$ to $M_K$ and $K$ in the RAM memory 403.

At next step S501, the processor 400 initializes the value of the variables $m_0(1)$ to $m_0(K)$ to one.

At next step S502, the processor 400 selects a variable $k'$ with $1 \leq k' \leq K$. Preferably, the processor 400 selects randomly $k'$.

At next step S503, the processor 400 checks whether or not the sum of the variables $m_0(1)$ to $m_0(K)$ is lower than the total number $C$ of available pilot signals, the second telecommunication device 10 can use.

It has to be noted here that $K \leq C$.

If the sum of the variables $m_0(1)$ to $m_0(K)$ is equal to the total number $C$ of available pilot signals, the processor 400 moves to step S525.

If the sum of the variables $m_0(1)$ to $m_0(K)$ is lower than the total number $C$ of available pilot signals, the processor 400 moves to step S504.

At step S504, the processor 400 sets the variable $k$ to the value of the variable $k'$.

At next step S505, the processor 400 checks if the variable $m_0(k)$ is equal to the number of antennas $M_K$ of the first telecommunication device $20_k$.

If the variable $m_0(k)$ is equal to the number of antennas $M_K$ of the first telecommunication device $20_k$, the processor 400 moves to step S507.

If the variable $m_0(k)$ is not equal to the number of antennas $M_K$ of the first telecommunication device $20_k$, the processor 400 moves to step S506.

At step S506, the processor 400 increments the value of variable $m_0(k)$, as example of one and moves to step S507.

At next step S507, the processor 400 checks whether or not the sum of the variables $m_0(1)$ to $m_0(K)$ is lower than the total number $C$ of available pilot signals, the second telecommunication device 10 has.

If the sum of the variables $m_0(1)$ to $m_0(K)$ is equal to the total number $C$ of available pilot signals, the processor 400 moves to step S525.

If the sum of the variables $m_0(1)$ to $m_0(K)$ is lower than the total number $C$ of available pilot signals, the processor 400 moves to step S508.

At step S508, the processor 400 checks if the value of $k$ is equal to $K$.

If the value of $k$ is not equal to $K$, the processor 400 moves to step S509, increments the value of variable $k$ by one and returns to step S505.

If the value of $k$ is equal to $K$, the processor 400 moves to step S515.

At step S515, the processor 400 set the value of the variable $k$ to one.

At next step S515, the processor 400 checks if the variable $m_0(k)$ **is** equal to the number of antennas $M_K$ of the first telecommunication device $20_k$.

If the variable $m_0(k)$ is equal to the number of antennas $M_K$ of the first telecommunication device $20_k$, the processor 400 moves to step S518.

If the variable $m_0(k)$ is not equal to the number of antennas $M_K$ of the first telecommunication device $20_k$, the processor 400 moves to step S517.

At step S517, the processor 400 increments the value of variable $m_0(k)$, as example of one and moves to step S518.

At next step S518, the processor 400 checks whether or not the sum of the variables $m_0(1)$ to $m_0(K)$ is lower than the total number $C$ of available pilot signals, the second telecommunication device 10 has.

If the sum of the variables $m_0(1)$ to $m_0(K)$ is equal to the total number $C$ of available pilot signals, the processor 400 moves to step S525.

If the sum of the variables $m_0(1)$ to $m_0(K)$ is lower than the total number $C$ of available pilot signals, the processor 400 moves to step S519.

At step S519, the processor 400 checks if the value of $k$ is equal to $k'$-1.

If the value of $k$ is not equal to $k'$-1, the processor 400 moves to step S520, increments the value of variable $k$ by one and returns to step S516.

If the value of $k$ is equal to $k'$-1, the processor 400 returns to step S502.

At step S525, the processor 400 commands the transfer to each first telecommunication device $20_k$ with $k$=1 to $K$ of the corresponding value of the variable $m_0(k)$.

For each first telecommunication device $20_k$, the variable $m_0(k)$ is the number of information representative of the quality of the signals transferred between the first and second telecommunication devices that the first telecommunication device $20_k$ has to report as a channel state information.

At next step S526, the processor 400 of the second telecommunication device 10 commands the transfer of pilot signals to at least a part of the first telecommunication devices $20_k$, with $k$=1 to $K$.

The processor 400 allocates then to each at least a part of the first telecommunication device $20_k$, a number of pilot signals which is equal to $m_0(k)$.

At next step S527, the processor 400 detects the reception of the channel state information transferred by at least a part of the first telecommunication devices 20.

The channel state information is received under the form of pilot signals or under the form of bit information.

At next step S528, the processor 400 determines to which first telecommunication device $20_k$, with $k$=1 to $K$, group of data has to be transferred according to the channel state information received from at least the part of the first telecommunication devices 20. The processor 400 determines also the modulation and coding scheme to be used by each first telecommunication device $20_k$ for receiving groups of data or for transferring groups of data.

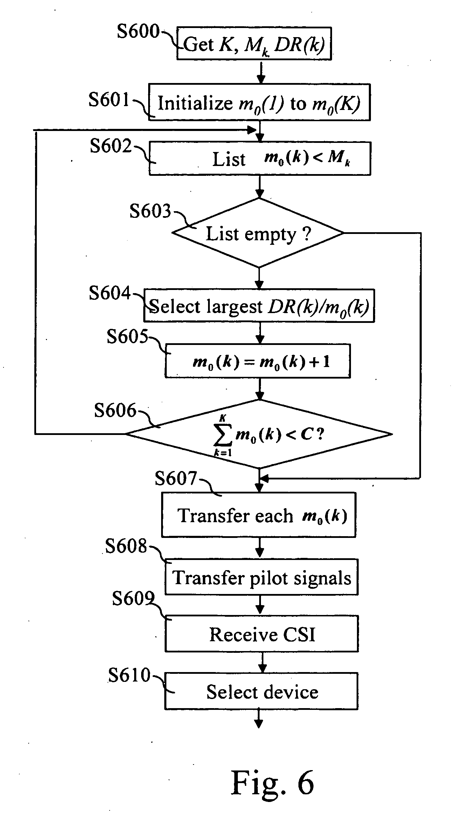

**Fig. 6** is an algorithm executed by the second telecommunication device according to a second mode of realisation of the second telecommunication device.

The present algorithm is executed each time a new first telecommunication device 20 is detected by the second telecommunication device 10 and/or periodically.

At step S600, the processor 400 of the second telecommunication device 10 receives from each first telecommunication device $20_l$ to $20_K$, through the uplink channel, information representative of the number of antennas each first telecommunication device $20_1$ to $20_K$ has and their respective requirement $DR(k)$ in term of data rate. At the same step, the processor 400 determines the number $K$ of first telecommunication devices 20.

The processor 400 memorises the number of antennas $M_1$ to $M_K$, the requirements $DR(1)$ to $DR(K)$ in term of data rate and $K$ in the RAM memory 403.

At next step S601, the processor 400 initializes the value of the variables $m_0(1)$ to $m_0(K)$ to one.

At next step S602, the processor 400 forms a list which comprises the variables $m_0(k)$ which are lower than the corresponding $M_k$.

At next step S603, the processor 400 checks if the formed list is empty or not.

If the list is empty, the processor 400 moves to step S607.

If the list is not empty, the processor 400 moves to step S604.

At step S604, the processor 400 selects in the list, the variable $m_0(k)$ which corresponds to the largest value of $DR(k) / m_0(k)$.

At next step S605, the processor 400 increments the value of the selected variable $m_0(k)$, as example of one and moves to step S606.

At next step S606, the processor 400 checks whether or not the sum of the variables $m_0(1)$ to $m_0(K)$ is lower than the total number $C$ of available pilot signals, the second telecommunication device 10 can use, where $K \leq C$.

If the sum of the variables $m_0(1)$ to $m_0(K)$ is equal to the total number $C$ of available pilot signals, the processor 400 moves to step S607.

If the sum of the variables $m_0(1)$ to $m_0(K)$ is lower than the total number $C$ of available pilot signals, the processor 400 moves to step S602.

At step S607, the processor 400 commands the transfer to each first telecommunication device $20_k$ with $k$=1 to $K$ of the corresponding value of the variable $m_0(k)$.

For each first telecommunication device $20_k$, the variable $m_0(k)$ is the number of information representative of the quality of the signals transferred between the first and second telecommunication devices that the first telecommunication device $20_k$ has to report as a channel state information.

At next step S608, the processor 400 of the second telecommunication device 10 commands the transfer of pilot signals to at least a part of the first telecommunication device $20_k$, with $k$= 1 to $K$.

The processor 400 allocates then to each at least a part of the first telecommunication device $20_k$, a number of pilot signals which is equal to $m_0(k)$.

At next step S609, the processor 400 detects the reception of the channel state information transferred by at least a part of the first telecommunication devices 20.

The channel state information is received under the form of pilot signals or under the form of bit information comprised in a group of data.

At next step S610, the processor 400 determines to which first telecommunication device $20_k$, with $k$=1 to $K$, group of data has to be transferred according to the channel state information received from at least the part of the first telecommunication devices 20.

The processor 400 determines also the modulation and coding scheme to be used by each first telecommunication device $20_k$ for receiving groups of data or for transferring groups of data.

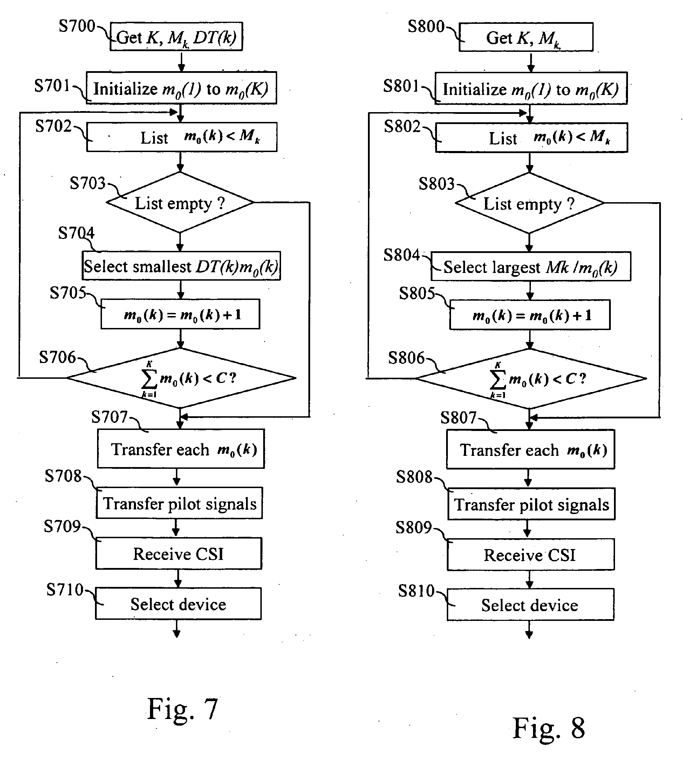

**Fig. 7** is an algorithm executed by the second telecommunication device according to a third mode of realisation of the second telecommunication device.

The present algorithm is executed each time a new first telecommunication device 20 is detected by the second telecommunication device 10 and/or periodically.

At step S700, the processor 400 of the second telecommunication device 10 receives from each first telecommunication device $20_1$ to $20_K$, through the uplink channel, information representative of the number of antennas each first telecommunication device $20_1$ to $20_K$ has and their respective requirement $DT(k)$ in term of response delay. At the same step, the processor 400 determines the number $K$ of first telecommunication devices 20.

The processor 400 memorises the number of antennas $M_1$ to $M_K$, the requirements $DT(1)$ to $DT(K)$ in term of response delay and $K$ in the RAM memory 403.

At next step S701, the processor 400 initializes the value of the variables $m_0(1)$ to $m_0(K)$ to one.

At next step S702, the processor 400 forms a list which comprises the variables $m_0(k)$ which are lower than the corresponding $M_k$.

At next step S703, the processor 400 checks if the formed list is empty or not.

If the list is empty, the processor 400 moves to step S707.

If the list is not empty, the processor 400 moves to step S704.

At step S704, the processor 400 selects in the list, the variable $m_0(k)$ which corresponds to the smallest value of $DT(k) * m_0(k)$.

At next step S705, the processor 400 increments the value of the selected variable $m_0(k)$, as example of one and moves to step S706.

At next step S706, the processor 400 checks whether or not the sum of the variables $m_0(1)$ to $m_0(K)$ is lower than the total number $C$ of available pilot signals, the second telecommunication device 10 can use, where $K \leq C$.

If the sum of the variables $m_0(1)$ to $m_0(K)$ is equal to the total number $C$ of available pilot signals, the processor 400 moves to step S707.

If the sum of the variables $m_0(1)$ to $m_0(K)$ is lower than the total number $C$ of available pilot signals, the processor 400 moves to step S702.

At step S707, the processor 400 commands the transfer to each first telecommunication device $20_k$ with $k$=1 to $K$ of the corresponding value of the variable $m_0(k)$ .

For each first telecommunication device $20_k$, the variable $m_0(k)$ is the number of information representative of the quality of the signals transferred between the first and second telecommunication devices that the first telecommunication device $20_k$ has to report as a channel state information.

At next step S708, the processor 400 of the second telecommunication device 10 commands the transfer of pilot signals to at least a part of the first telecommunication device $20_k$, with $k$=1 to $K$.

The processor 400 allocates then to each at least a part of the first telecommunication device $20_k$, a number of pilot signals which is equal to $m_0(k)$.

At next step S709, the processor 400 detects the reception of the channel state information transferred by at least a part of the first telecommunication devices 20.

The channel state information is received under the form of pilot signals or under the form of bit information comprised in a group of data.

At next step S710, the processor 400 determines to which first telecommunication device $20_k$, with $k$=1 to $K$, group of data has to be transferred according to the channel state information received from at least the part of the first telecommunication devices 20.

The processor 400 determines also the modulation and coding scheme to be used by each first telecommunication device $20_k$ for receiving groups of data or for transferring groups of data.

**Fig. 8** is an algorithm executed by the second telecommunication device according to a fourth mode of realisation of the second telecommunication device.

The present algorithm is executed each time a new first telecommunication device 20 is detected by the second telecommunication device 10 and/or periodically.

At step S800, the processor 400 of the second telecommunication device 10 receives from each first telecommunication device $20_1$ to $20_K$, through the uplink channel, information representative of the number of antennas each first telecommunication device $20_1$ to $20_K$ has. At the same step, the processor 400 determines the number $K$ of first telecommunication devices 20.

The processor 400 memorises the number of antennas $M_1$ to $M_K$ and $K$ in the RAM memory 403.

At next step S801, the processor 400 initializes the value of the variables $m_0(1)$ to $m_0(K)$ to one.

At next step S802, the processor 400 forms a list which comprises the variables $m_0(k)$ which are lower than the corresponding $M_k$.

At next step S803, the processor 400 checks if the formed list is empty or not.

If the list is empty, the processor 400 moves to step S807.

If the list is not empty, the processor 400 moves to step S804.

At step S804, the processor 400 selects in the list, the variable $m_0(k)$ which corresponds to the largest value of $M_k/m_0(k)$.

At next step S805, the processor 400 increments the value of the selected variable $m_0(k)$, as example of one and moves to step S806.

At next step S806, the processor 400 checks whether or not the sum of the variables $m_0(1)$ to $m_0(K)$ is lower than the total number $C$ of available pilot signals, the second telecommunication device 10 can use, where $K \leq C$.

If the sum of the variables $m_0(1)$ to $m_0(K)$ is equal to the total number $C$ of available pilot signals, the processor 400 moves to step S807.

If the sum of the variables $m_0(1)$ to $m_0(K)$ is lower than the total number C of available pilot signals, the processor 400 moves to step S802.

At step S807, the processor 400 commands the transfer to each first telecommunication device $20_k$ with $k=1$ to $K$ of the corresponding value of the variable $m_0(k)$.

For each first telecommunication device $20_k$, the variable $m_0(k)$ is the number of information representative of the quality of the signals transferred between the first and second telecommunication devices that the first telecommunication device $20_k$ has to report as a channel state information.

At next step S808, the processor 400 of the second telecommunication device 10 commands the transfer of pilot signals to at least a part of the first telecommunication device $20_k$, with $k=1$ to $K$.

The processor 400 allocates then to each at least a part of the first telecommunication device $20_k$, a number of pilot signals which is equal to $m_0(k)$.

At next step S809, the processor 400 detects the reception of the channel state information transferred by at least a part of the first telecommunication devices 20.

The channel state information is received under the form of pilot signals or under the form of bit information comprised in a group of data.

At next step S810, the processor 400 determines to which first telecommunication device $20_k$, with $k=1$ to $K$, group of data has to be transferred according to the channel state information received from at least the part of the first telecommunication devices 20.

The processor 400 determines also the modulation and coding scheme to be used by each first telecommunication device $20_k$ for receiving groups of data or for transferring groups of data.

Is has to be noted here that the first, second, third and fourth modes of realisation of the second telecommunication device are in a variant combined in order to determine $m_0(k)$ according to the number of first telecommunication devices 20 and/or the number of antennas the first telecommunication devices 20 have and/or according to the requirements in term of data rate and or response delay.

By changing for each first telecommunication device, the number of information representative of the quality of the signals transferred between the first and second telecommunication devices the first telecommunication device has to report as a channel state information according to the number of first telecommunication devices 20 and/or the number of antennas the first telecommunication devices 20 have and/or according to the requirements in term of data rate and or response delay for the channel station information reporting, the available resources of the wireless telecommunication network are efficiently used in any environment.

**Fig. 9** is an algorithm executed by the first telecommunication device according to the first mode of realisation of the first telecommunication device.

The present algorithm is executed by each first telecommunication device $20_1$ to $20_K$, it will be disclosed when it is executed by the first telecommunication device $20_k$.

At step S900, the processor 200 of, as example, the first telecommunication device $20_k$, detects the reception through the channel interface 205 of a group of data which comprises the variable $m_0(k)$ which is the number of information representative of the quality of the signals transferred between the first and second telecommunication devices that the first telecommunication device $20_k$ has to report as a channel state information.

The variable $m_0(k)$ is either determined according to the first or second or third or fourth modes of realisation of the second telecommunication device.

At step S901, the first telecommunication device 20k receives pilot signals $x_k(p) = H_{DL,k}s(p) + z_k(p)$ through the channel interface 205.

At next step S902, the MIMO channel matrix estimation module 305 estimates the matrix $H_{DL,K}$ from the received pilot signals.

At next step S903, the processor 200 of the first telecommunication device $20_k$ performs a singular value decomposition of $H_{DL,k}^T = U \Lambda Q^H$,

where $U = [u_1,...u_N]$ is the $N*N$ unitary matrix, $Q = [q_1,...q_{M_k}]$ is the $M_k * M_k$ unitary matrix, $[]^H$ denotes the complex conjugate transpose and $\Lambda = diag[\lambda_1, \lambda_2,...,\lambda_d]$ with $\lambda_1 \geq ... \geq \lambda_d \geq 0$ is the $N* M_k$ diagonal matrix of singular values with $d = \min\{M_k, N\}$.

At next step S904, the processor 200 selects the $m_0(k)$ largest singular-values. As example, if the first telecommunication device 20k has three antennas, and the received $m_0(k)$ equals to two, only the two largest singular-values are selected.

It has to be noted here that, the $m_0(k)$ singular-values are selected from the downlink MIMO channel matrix $H_{DL,k}$ between the second telecommunication device 10 and the first telecommunication device $20_k$.

At next step S905 the processor 200 determines a downlink linear transform matrix $V_{DL}$.

The first telecommunication device $20_k$ determines $V_{DL}$ as $V_{DL} = \left[ q_1, ..., q_{m0(k)} \right]$, where $\left[ q_1, ..., q_{m0(k)} \right]$ are the vectors which correspond to the selected singular-values.

The virtual downlink MIMO channel $\tilde{H}_{DL,k} = V_{DL}^T H_{DL,k}$ is then expressed as

$$\tilde{H}_{DL,k} = V_{DL}^T H_{DL,k} = \left( H_{DL,k}^T V_{DL} \right)^T = \left[ \lambda_1 u_1, ..., \lambda_{m0(k)} u_{m0(k)} \right]^T.$$

In a different form, $H_{DL,k}^T = U \Lambda Q^H$ can then be transformed into

$$H_{DL,k}^* H_{DL,k}^T = Q \Lambda^2 Q^H$$ where [ ]* denotes the complex conjugate. Here we have :

$$H_{DL,k}^* H_{DL,k}^T Q = Q \Lambda^2$$

$$H_{DL,k}^* H_{DL,k}^T q_m = \lambda_m^2 q_m.$$

As $q_1, ... q_{m0(k)}$ are the selected eigenvectors of $H_{DL,k}^* H_{DL,k}^T$, $V_{DL}$ is given by:

$$V_{DL} = \left[ e_1 \left\langle H_{DL,k}^* H_{DL,k}^T \right\rangle, ... e_{m0(k)} \left\langle H_{DL,k}^* H_{DL,k}^T \right\rangle \right],$$

where $e_m \langle . \rangle$ denotes the eigenvector of $\langle . \rangle$ corresponding to the $m$-th largest eigenvalue.

It has to be noted here that, if the telecommunication system uses Time Division Duplexing scheme, $H_{DL,k}^T = H_{UL,k}$, the first telecommunication device $20_k$ sends $m_0(k)$ pilot signals $r'(p)$ multiplied by the uplink linear transform matrix $V_{DL}$.

As the received signal at the second telecommunication device 10 is represented by $x_{BS}(p) = H_{UL,k} V_{DL} r'(p) + z_{BS}(p)$, the second telecommunication device 10 can obtain $\left( H_{UL,k} V_{DL} \right)^T = V_{DL}^T H_{UL,k}$ from $x_{BS}(p)$, where $H_{UL,k}$ is the $N*M_k$ uplink MIMO channel matrix between the first telecommunication device $20_k$ and the second telecommunication device 10.

Each element $(n,m)$ with $m = 1$ to $M_k$ and $n = 1$ to $N$ of the matrix $H_{UL,k}$ represents the complex propagation gain from the $m$-th antenna of the first telecommunication device $20_k$ and the $n$-th of the second telecommunication device 10.

At the same step, the processor 200 transfers the determined matrix $V_{DL}$ to the downlink linear transform module 310 which uses the determined matrix $V_{DL}$ for executing a linear transformation of the signal vector $x_k(p)$ using the $m_0(k)* M_k$ matrix $V_{DL}^T$.

At next step S906, the processor 200 determines the channel state information on the downlink channel considering $x'(p)$.

According to a particular feature of the present invention, the channel state information is the $m_0(k)*N$ virtual downlink MIMO channel matrix $\tilde{H}_{DL,k}$.

At next step S907, the processor 200 commands the transfer, to the second telecommunication device 10, of the determined channel state information through the uplink channel.

Preferably, the channel state information is reported by transferring $m_0(k)$ pilot signals which are multiplied by the downlink linear transform matrix $V_{DL}$. As the signals transferred by the first telecommunication device are also multiplied by the propagation gains between the antennas of the telecommunication devices, the channel responses at the second telecommunication device 10 is given by $H_{UL,k}V_{DL} = (V_{DL}^{T}H_{UL,k})^{T}$.

Therefore, the second telecommunication device 10 obtains the knowledge of the virtual downlink MIMO channel $\tilde{H}_{DL,k} = V_{DL}^{T}H_{DL,k}$ from the $m_0(k)$ received pilot signals.

It has to be noted here that, the channel state information can also be reported under the form of information bits.

The processor 200 returns then to step S900.

**Fig. 10** is an algorithm executed by the first telecommunication device according to the second mode of realisation of the first telecommunication device.

The present algorithm is executed by each first telecommunication device $20_l$ to $20_K$, it will be disclosed when it is executed by the first telecommunication device $20_k$.

At step S100, the processor 200 of, as example, the first telecommunication device $20_k$, detects the reception through the channel interface 205 of a group of data which comprises the variable $m_0(k)$ which is the number of information representative of the quality of the signals transferred between the first and second telecommunication devices that the first telecommunication device $20_k$ has to report as a channel state information.

The variable $m_0(k)$ is either determined according to the first or second or third or fourth modes of realisation of the second telecommunication device.

At step S101, the first telecommunication device 20k receives pilot signals $x_k(p)=H_{DL,K}s(p)+z_k(p)$ through the channel interface 205.

At next step S102, the MIMO channel matrix estimation module 320 estimates the uplink channel matrix $H_{UL,k}$.

In TDD scheme, $H_{UL,k} = H_{DL,k}^{T}$ as the channel responses between the uplink and downlink channels of the telecommunication network 15 are reciprocal.

In FDD scheme, the channel responses between the uplink and downlink channels of the telecommunication network 15 are not perfectly reciprocal. However, since the uplink and the downlink channels have similar characteristics, especially for channels having a large gain, $H_{UL,k} = H_{DL,k}^{T}$ can be considered also.

At next step S103, the processor 200 of the first telecommunication device $20_k$ performs a singular value decomposition of $H_{UL,k} = U_U\Lambda_U Q_U^{H}$ where $U_U = [u_{U1},...u_{UN}]$ is the $N*N$ unitary matrix, $Q_U = [q_{U1},...q_{UMk}]$ is the $M_k* M_k$ unitary matrix and $\Lambda_U = diag[\lambda_{U1},\lambda_{U2},...,\lambda_{Ud}]$ with $\lambda_{U1} \geq ... \geq \lambda_{Ud} \geq 0$ is the $N*M_k$ diagonal matrix of real singular-values with $d = min\{M_k,N\}$.

At next step S104, the processor 200 selects the $m_0(k)$ largest singular-values.

It has to be noted also that, the $m_0(k)$ singular-values are selected from the uplink MIMO channel matrix $H_{UL,k}$ between the first telecommunication device $20_k$ and the second telecommunication device 10.

At next step S105 the processor 200 determines a linear transform matrix $V_{UL}$.

The first telecommunication device $20_k$ determines $V_{UL}$ as $V_{UL} = [q_{U1},...,q_{Um0(k)}]$.

The virtual uplink MIMO channel $\tilde{H}_{UL,K} = H_{UL,K}V_{UL}$ is then expressed as

$$\tilde{H}_{UL,k} = H_{UL,k}V_{UL} = [\lambda_{U1}u_{U1},...,\lambda_{Um0(k)}u_{Um0(k)}]^{T}.$$

On the same way as the one disclosed for $V_{DL}$, $V_{UL}$ is given by:

$$V_{UL} = [e_1\langle H_{UL,k}^{H}H_{UL,k}\rangle,...e_{m0(k)}\langle H_{UL,k}^{H}H_{UL,k}\rangle],$$

where $e_m\langle.\rangle$ denotes the eigenvector of $\langle.\rangle$ corresponding to the $m$-th largest eigenvalue.

At next step S105, the processor 200 transfers the determined matrix $V_{UL}$ to the uplink linear transform module 325 which uses the determined matrix $V_{UL}$ for executing a linear transformation of the $m_0(k)$ signals $r'(p)=[r'_1(p),..., r'_{m0(k)}(p)]^{T}$ into the signal vector $r(p)$ using the linear transformation matrix $V_{UL}$ as $r(p) = V_{UL} r(p)'$.

At next step S107, the processor 200 commands the transfer, to the second telecommunication device 10, of the determined channel state information through the uplink channel.

Preferably, the channel state information is reported by transferring $m_0(k)$ pilot signals composed of $p_0$ symbols $r'(1),...r'(p_0)$ to the second telecommunication device 10 through the channel interface 205.

The processor 200 returns then to step S100.

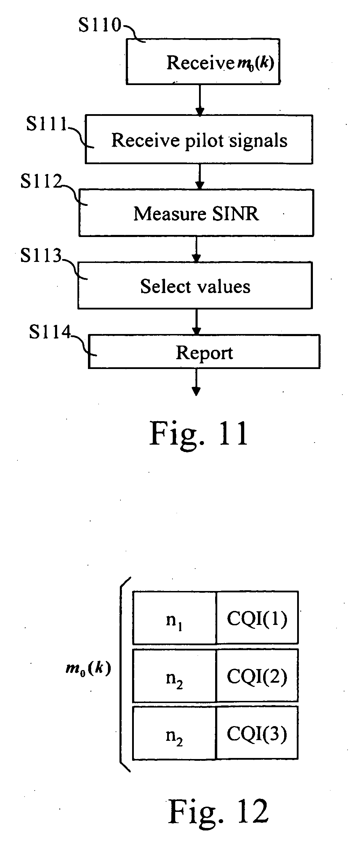

**Fig. 11** is an algorithm executed by the first telecommunication device according to the third mode of realisation of the first telecommunication device.

The present algorithm is executed by each first telecommunication device $20_1$ to $20_K$, it will be disclosed when it is executed by the first telecommunication device $20_k$.

At step S110, the processor 200 of, as example, the first telecommunication device $20_k$, detects the reception through the channel interface 205 of a group of data which comprises the variable $m_0(k)$ is the number of information representative of the quality of the signals transferred between the first and second telecommunication devices that the first telecommunication device $20_k$ has to report as a channel state information.

The variable $m_0(k)$ is either determined according to the first or second or third or fourth modes of realisation of the second telecommunication device.

At step S111, the first telecommunication device 20k receives pilot signals through the channel interface 205.

The second telecommunication device 10 transfers $N$ pilot signals $s(p) = [s_1(p),..., s_N(p)]^T$ using fixed $N$ transmit beamforming based on the constant $N*1$ different weights $w_1,..., w_N$.

The first telecommunication device $20_k$ receives a $M_k*1$ signal vector

$$x_k(p) = H_{DL,k}Ws(p) + z_k(p) \text{ with } W = [w_1,...w_N].$$

The downlink direction control module 345 performs a downlink beamforming for each signal $s_1(p),..., s_N(p)$.

The downlink direction control module 345 uses $N$ weights $v_{kn}$ with $n=1$ to $N$ in order to perform the downlink beamforming.

Preferably, the weight $v_{kn}$ for the $n$-th signal is given by $v_{kn} = \Phi^{-1}\alpha_n$

where $$\Phi = \frac{1}{p_0}\sum_{p=1}^{p_0} x_k(p)x_k(p)^H, \quad a_n = \frac{1}{p_0}\sum_{p=1}^{p_0} x_k(p)s_n(p)^{\cdot}.$$

At next step S112, the processor 200 commands the channel estimation module 340 of the channel interface 205 to transfer a downlink channel quality estimated for each signal $s_1(p),..., s_N(p)$.

From the output of the downlink direction control module 345, the channel estimation module 340 measures the downlink channel quality for each signal $s_1(p),..., s_N(p)$. Preferably and in a non limitative way, the downlink channel quality is the Signal to Interference plus Noise Ratio $\gamma_1$ to $\gamma_N$ determined at the outputs $v_{k1}^T x_k(p),..., v_{kN}^T x_k(p)$ 1 respectively for each signal $s_1(p)$ to $s_N(p)$.

At next step S113, the processor 200 selects the $m_0(k)$ largest Signal to Interference plus Noise Ratio among the $N$ Signal to Interference plus Noise Ratio $\gamma_1$ to $\gamma_N$.

At next step S114, the processor 200 commands the transfer, to the second telecommunication device 10, of the selected $m_0(k)$ largest Signal to Interference plus Noise Ratio as a channel state information through the uplink channel.

**Fig. 12** is an example of the channel state information transferred by a first telecommunication device according to the third mode of realisation of the first telecommunication device.

The channel state information is composed of the $m_0(k)$, in the present example $m_0(k) = 3$, largest Signal to Interference plus Noise Ratio represented by CQI(1) to CQI(3) and the identifier $n_1$ to $n_3$ of the beamformers which correspond to the selected largest Signal to Interference plus Noise Ratio.

The channel state information is transferred in a group of data.

Many other techniques can be used also in the present invention.

As example, the first telecommunication device $20_k$ determines the propagation gains between the antennas of the first and second telecommunication devices as it has already been described.

The first telecommunication device $20_k$ forms a downlink channel matrix $H_{DL,k} = \begin{bmatrix} h_1 \\ \cdot \\ \cdot \\ \cdot \\ h_{Mk} \end{bmatrix}$, where $h_m$ with $m=1$ to $M_k$ is a $1*N$ vector.

The first telecommunication device $20_k$ forms, for each of the first telecommunication device's antenna, a group propagation gains and determines among the groups, the ones which have the highest norm.

The first telecommunication device selects among the determined propagation gains the group or groups which has or have the highest $m_0(k)$ norm, as the subset of the determined propagation gains.

The first telecommunication device $20_k$ selects $m_0(k)$ antennas among its $M_k$ antennas which have the $m_0(k)$ largest values $\|h_m\|$ among $\|h_1\|,...,\|h_{Mk}\|$.

For instance, the first telecommunication device $20_k$ has 4 antennas, $m_0(k) = 2$ and $\|h_1\|$ and $\|h_3\|$ are higher than $\|h_2\|$ and $\|h_4\|$.

The downlink linear transform matrix $V_{DL}$ is then equal to:

$$V_{DL} = \begin{bmatrix} 1 & 0 \\ 0 & 0 \\ 0 & 1 \\ 0 & 0 \end{bmatrix}.$$

Then, $V_{DL}^T H_{DL,k} = \begin{bmatrix} h_1 \\ h_3 \end{bmatrix}$.

Thus, the virtual MIMO downlink channel comprises only the highest propagation gains $\|h_1\|$ and $\|h_3\|$.

Naturally, many modifications can be made to the embodiments of the invention described above without departing from the scope of the present invention.

**Claims**

1. Method for controlling channel state information transferred by a first telecommunication device ($20_1$, $20_K$) to a second telecommunication device (10), the first telecommunication device ($20_1$, $20_K$) determining information representative of the quality of the signals transferred between the first and second telecommunication devices, **characterised in that** the method comprises the steps executed by the second telecommunication device (10) of :

   - determining a number ($m_0(k)$) of information representative of the quality of the signals transferred between the first and second telecommunication devices the first telecommunication device has to report as a channel state information,
   - transferring the determined number to the first telecommunication device (S525, S607, S707, S807).

2. Method according to claim 1, **characterised in that** the number of information representative of the quality of the signals transferred between the first and second telecommunication devices the first telecommunication device has to report is lower than the number of the determined information representative of the quality of the signals transferred between the first and second telecommunication devices.

3. Method according to claim 2, **characterised in that** the method comprises further step of allocating to the first telecommunication device a number of pilot signals which is equal to the determined number.

4. Method according to any of the claims 1 to 3, **characterised in that** the method comprises further step of :

   - receiving the channel state information from the first telecommunication device,
   - controlling the transfer of the signals representative of at least a group of data between the first and the second telecommunication devices according to received the channel state information.

5. method according to claim 3 or 4, **characterised in that** the method comprises further step of determining the number of first telecommunication devices which are linked to the second telecommunication device.

6. Method according to claim 5, **characterised in that** the number of information representative of the quality of the signals transferred between the first and second telecommunication devices the first telecommunication device has to report as a channel state information is determined (S500, S600, S700, S800) according to the number of first telecommunication devices which are linked to the second telecommunication device.

7. Method according to claim 5 or 6, **characterised in that** the method comprises further step of receiving the number of antennas (S500, S600, S700, S800) each first telecommunication device comprises and **in that** the number of information representative of the quality of the signals transferred between the first and second telecommunication devices each first telecommunication device has to report as a channel state information is determined according to the number of antennas (MS1Ant1, MS1AntM, MSKAnt1, MSKAntM) the first telecommunication device comprises.

8. Method according to claim 5, **characterised in that** the method comprises further step of receiving from each first telecommunication device their respective requirement in terms of data rate (S600) and **in that** the number of information representative of the quality of the signals transferred between the first and second telecommunication devices each first telecommunication device has to report as a channel state information is determined according to the requirements in terms of data rate.

9. Method according to claim 5, **characterised in that** the method comprises further step of receiving from each first telecommunication device their respective requirement in terms of response delay (S700) and **in that** the number of information representative of the quality of the signals transferred between the first and second telecommunication devices each first telecommunication device has to report as a channel state information is determined according to the requirements in terms of response delay.

10. Method for transferring, by a first telecommunication device ($20_1$, $20_K$), channel state information (S906, S106, S112) to a second telecommunication device (10), the first telecommunication device ($20_1$, $20_K$) determining information representative of the quality of the signals transferred between the first and second telecommunication devices, **characterised in that** the method comprises the steps executed by the first telecommunication device ($20_1$, $20_K$) of :

   - receiving (S900, S100, S110) from the second telecommunication device a number of ($m_0(k)$) information representative of the quality of the signals transferred between the first and second telecommunication devices the first telecommunication device has to report as a channel state information,
   - determining a channel state information (S906, S106, S112) which comprises the received number of information representative of the quality of the signals transferred between the first and second telecommunication devices,
   - transferring the channel state information to the second telecommunication device (S907, S107, S114).

11. Method according to claim 10, **characterised in that** the first telecommunication device comprises antennas and the second telecommunication device comprises antennas and **in that** the information representative of the quality of the signals transferred between the first and second telecommunication devices is the propagation gain between one antenna of the first telecommunication devices and one antenna of the second telecommunication device.

12. Method according to claim 11, **characterised in that** the propagations gains are coefficients of a downlink channel matrix and the determined information representative of the quality of the signals transferred between the first and second telecommunication devices comprised in the channel state information are determined by executing a singular value decomposition of the downlink channel matrix (S903).

13. Method according to claim 12, **characterised in that** the propagations gains are coefficients of an uplink channel matrix and the determined information representative of the quality of the signals transferred between the first and second telecommunication devices comprised in the channel state information are determined by executing a singular value decomposition of the uplink channel matrix (S103).

14. Method according to claim 10, **characterised in that** the first telecommunication device comprises antennas and **in that** the channel state information is representative of the Signal to Interference plus Noise Ratio measured on signals received by the antennas of the first telecommunication device (S112).

15. Device for controlling channel state information transferred by a first telecommunication device ($20_1$, $20_K$) to a second telecommunication device (10), the first telecommunication device ($20_1$, $20_K$) determining information representative of the quality of the signals transferred between the first and second telecommunication devices, **characterised in that** the device for controlling is included in the second telecommunication device (10) and comprises :

- means (10) for determining a number of information representative of the quality of the signals transferred between the first and second telecommunication devices the first telecommunication device has to report as a channel state information,
- means (10) for transferring the determined number to the first telecommunication device.

16. First telecommunication device ($20_1$, $20_K$) which transfers channel state information to a second telecommunication device (10), the first telecommunication device ($20_1$, $20_K$) determining information representative of the quality of the signals transferred between the first. and second telecommunication devices, **characterised in that** the first telecommunication device ($20_1$, $20_K$) comprises :

- means (205) for receiving from the second telecommunication device a number of information representative of the quality of the signals transferred between the first and second telecommunication devices the first telecommunication device has to report as a channel state information,
- means (205) for determining a channel state information which comprises the received number of information representative of the quality of the signals transferred between the first and second telecommunication devices,
- means (205) for transferring the channel state information to the second telecommunication device.

17. Computer program which can be directly loaded into a programmable device, comprising instructions or portions of code for implementing the steps of the method according to claims 1 to 9, when said computer program is executed on said programmable device.

18. Computer program which can be directly loaded into a programmable device, comprising instructions or portions of code for implementing the steps of the method according to claims 10 to 14, when said computer program is executed on said programmable device.

19. Signal transferred to a second telecommunication device from a first telecommunication device, **characterised in that** the signal comprises a number of information representative of the quality of the signals transferred between the first and second telecommunication devices, the second telecommunication device has to report as a channel state information to the first telecommunication device.


**Patentansprüche**

1. Verfahren zum Steuern von durch eine erste Telekommunikationsvorrichtung ($20_1$, $20_K$) zu einer zweiten Telekommunikationsvorrichtung (10) transferierter Kanalzustandsinformation, wobei die erste Telekommunikationsvorrichtung ($20_1$, $20_K$) Information bestimmt, die die Qualität der zwischen der ersten und der zweiten Telekommunikationsvorrichtung transferierten Signale darstellt, **dadurch gekennzeichnet, dass** das Verfahren die durch die zweite Telekommunikationsvorrichtung (10) ausgeführten folgenden Schritte aufweist:

- Bestimmen einer Anzahl ($m_o(k)$) von Information, die die Qualität der zwischen der ersten und der zweiten Telekommunikationsvorrichtung transferierten Signale darstellt, die die erste Telekommunikationsvorrichtung als eine Kanalzustandsinformation zu berichten hat,
- Transferieren der bestimmten Anzahl zu der ersten Telekommunikationsvorrichtung (S525, S607, S707, S807).

2. Verfahren nach Anspruch 1, **dadurch gekennzeichnet, dass** die Anzahl von Information, die die Qualität der zwischen der ersten und der zweiten Telekommunikationsvorrichtung transferierten Signale darstellt, die die erste Telekommunikationsvorrichtung zu berichten hat, niedriger als die Anzahl der bestimmten Information ist, die die Qualität der zwischen der ersten und der zweiten Telekommunikationsvorrichtung transferierten Signale darstellt.

3. Verfahren nach Anspruch 2, **dadurch gekennzeichnet, dass** das Verfahren einen weiteren Schritt zum Zuteilen einer Anzahl von Pilotsignalen, die gleich der bestimmten Anzahl ist, zu der ersten Telekommunikationsvorrichtung aufweist.

4. Verfahren nach einem der Ansprüche 1 bis 3, **dadurch gekennzeichnet, dass** das Verfahren weiterhin den folgenden Schritt aufweist:

- Empfangen der Kanalzustandsinformation von der ersten Telekommunikationsvorrichtung,
- Steuern des Transfers der Signale, die wenigstens eine Gruppe von Daten darstellen, zwischen der ersten und der zweiten Telekommunikationsvorrichtung gemäß der empfangenen Kanalzustandsinformation.

**5.** Verfahren nach Anspruch 3 oder 4, **dadurch gekennzeichnet, dass** das Verfahren einen weiteren Schritt zum Bestimmen der Anzahl von ersten Telekommunikationsvorrichtungen aufweist, die mit der zweiten Telekommunikationsvorrichtung verbunden sind.

**6.** Verfahren nach Anspruch 5, **dadurch gekennzeichnet, dass** die Anzahl von Information, die die Qualität der zwischen der ersten und der zweiten Telekommunikationsvorrichtung transferierten Signale darstellt, die die erste Telekommunikationsvorrichtung als eine Kanalzustandsinformation zu berichten hat, gemäß der Anzahl von ersten Telekommunikationsvorrichtungen bestimmt wird (S500, S600, S700, S800), die mit der zweiten Telekommunikationsvorrichtung verbunden sind.

**7.** Verfahren nach Anspruch 5 oder 6, **dadurch gekennzeichnet, dass** das Verfahren einen weiteren Schritt zum Empfangen der Anzahl von Antennen aufweist (S500, S600, S700, S800), die jede erste Telekommunikationsvorrichtung aufweist, und dass die Anzahl von Information, die die Qualität der zwischen der ersten und der zweiten Telekommunikationsvorrichtung transferierten Signale darstellt, die jede erste Telekommunikationsvorrichtung als eine Kanalzustandsinformation zu berichten hat, gemäß der Anzahl von Antennen (MS1Ant1, MS1AntM, MSKAnt1, MSKAntM) bestimmt wird, die die erste Telekommunikationsvorrichtung aufweist.

**8.** Verfahren nach Anspruch 5, **dadurch gekennzeichnet, dass** das Verfahren einen weiteren Schritt zum Empfangen von jeder ersten Telekommunikationsvorrichtung ihrer jeweiligen Erfordernisse bezüglich einer Datenrate (S600) aufweist, und dass die Anzahl von Information, die die Qualität der zwischen der ersten und der zweiten Telekommunikationsvorrichtung transferierten Signale darstellt, die jede erste Telekommunikationsvorrichtung als eine Kanalzustandsinformation zu berichten hat, gemäß den Erfordernissen bezüglich einer Datenrate bestimmt wird.

**9.** Verfahren nach Anspruch 5, **dadurch gekennzeichnet, dass** das Verfahren einen weiteren Schritt zum Empfangen von jeder ersten Telekommunikationsvorrichtung ihrer jeweiligen Erfordernisse bezüglich einer Ansprechverzögerung (S700) aufweist, und dass die Anzahl von Information, die die Qualität der zwischen der ersten und der zweiten Telekommunikationsvorrichtung transferierten Signale darstellt, die jede erste Telekommunikationsvorrichtung als eine Kanalzustandsinformation zu berichten hat, gemäß den Erfordernissen bezüglich einer Ansprechverzögerung bestimmt wird.

**10.** Verfahren zum Transferieren von Kanalzustandsinformation (S906, S106, S112) durch eine erste Telekommunikationsvorrichtung ($20_1$, $20_K$) zu einer zweiten Telekommunikationsvorrichtung (10), wobei die erste Telekommunikationsvorrichtung ($20_1$, $20_K$) Information bestimmt, die die Qualität der zwischen der ersten und der zweiten Telekommunikationsvorrichtung transferierten Signale darstellt, **dadurch gekennzeichnet, dass** das Verfahren die durch die erste Telekommunikationsvorrichtung ausgeführten folgenden Schritte aufweist:

- Empfangen (S900, S100, S110) von der zweiten Telekommunikationsvorrichtung einer Anzahl ($m_o(k)$) von Information, die die Qualität der zwischen der ersten und der zweiten Telekommunikationsvorrichtung transferierten Signale darstellt, die die erste Telekommunikationsvorrichtung als eine Kanalzustandsinformation zu berichten hat,
- Bestimmen einer Kanalzustandsinformation (S906, S106, S112), die die empfangene Anzahl von Information umfasst, die die Qualität der zwischen der ersten und der zweiten Telekommunikationsvorrichtung transferierten Signale darstellt,
- Transferieren der Kanalzustandsinformation zu der zweiten Telekommunikationsvorrichtung (S907, S107, S114).

**11.** Verfahren nach Anspruch 10, **dadurch gekennzeichnet, dass** die erste Telekommunikationsvorrichtung Antennen aufweist und die zweite Telekommunikationsvorrichtung Antennen aufweist und dass die Information, die die Qualität der zwischen der ersten und der zweiten Telekommunikationsvorrichtung transferierten Signale darstellt, der Ausbreitungsgewinn zwischen einer Antenne der ersten Telekommunikationsvorrichtung und einer Antenne der zweiten Telekommunikationsvorrichtung ist.

**12.** Verfahren nach Anspruch 11, **dadurch gekennzeichnet, dass** die Ausbreitungsgewinne Koeffizienten einer Abwärtsstreckenkanalmatrix sind und die bestimmte Information, die die Qualität der zwischen der ersten und der zweiten Telekommunikationsvorrichtung transferierten Signale darstellt, die in der Kanalzustandsinformation umfasst ist, durch Ausführen einer Singulärwertzerlegung der Abwärtsstreckenkanalmatrix (S903) bestimmt werden.

**13.** Verfahren nach Anspruch 12, **dadurch gekennzeichnet, dass** die Ausbreitungsgewinne Koeffizienten einer Aufwärtsstreckenkanalmatrix sind und die bestimmte Information, die die Qualität der zwischen der ersten und der zweiten Telekommunikationsvorrichtung transferierten Signale darstellt, die in der Kanalzustandsinformation umfasst ist, durch Ausführen einer Singulärwertzerlegung der Aufwärtsstreckenkanalmatrix (S103) bestimmt werden.

**14.** Verfahren nach Anspruch 10, **dadurch gekennzeichnet, dass** die erste Telekommunikationsvorrichtung Antennen aufweist und dass die Kanalzustandsinformation das Signal-zu-Interferenz-plus-Rauschen-Verhältnis darstellt, das an Signalen gemessen wird, die durch die Antennen der ersten Telekommunikationsvorrichtung empfangen werden (S112).

**15.** Vorrichtung zum Steuern von durch eine erste Telekommunikationsvorrichtung ($20_1$, $20_K$) zu einer zweiten Telekommunikationsvorrichtung (10) transferierter Kanalzustandsinformation, wobei die erste Telekommunikationsvorrichtung ($20_1$, $20_K$) Information bestimmt, die die Qualität der zwischen der ersten und der zweiten Telekommunikationsvorrichtung transferierten Signale darstellt, **dadurch gekennzeichnet, dass** die Vorrichtung zum Steuern in der zweiten Telekommunikationsvorrichtung (10) enthalten ist und folgendes aufweist:

- eine Einrichtung (10) zum Bestimmen einer Anzahl von Information, die die Qualität der zwischen der ersten und der zweiten Telekommunikationsvorrichtung transferierten Signale darstellt, die die erste Telekommunikationsvorrichtung als eine Kanalzustandsinformation zu berichten hat,
- eine Einrichtung (10) zum Transferieren der bestimmten Anzahl zu der ersten Telekommunikationsvorrichtung.

**16.** Erste Telekommunikationsvorrichtung ($20_1$, $20_K$), die Kanalzustandsinformation zu einer zweiten Telekommunikationsvorrichtung (10) transferiert, wobei die erste Telekommunikationsvorrichtung ($20_1$, $20_K$) Information bestimmt, die die Qualität der zwischen der ersten und der zweiten Telekommunikationsvorrichtung transferierten Signale darstellt, **dadurch gekennzeichnet, dass** die erste Telekommunikationsvorrichtung ($20_1$, $20_K$) folgendes aufweist:

- eine Einrichtung (205) zum Empfangen von der zweiten Telekommunikationsvorrichtung einer Anzahl von Information, die die Qualität der zwischen der ersten und der zweiten Telekommunikationsvorrichtung transferierten Signale darstellt, die die erste Telekommunikationsvorrichtung als eine Kanalzustandsinformation zu berichten hat,
- eine Einrichtung (205) zum Bestimmen einer Kanalzustandsinformation, die die empfangene Anzahl von Information aufweist, die die Qualität der zwischen der ersten und der zweiten Telekommunikationsvorrichtung transferierten Signale darstellt,
- eine Einrichtung (205) zum Transferieren der Kanalzustandsinformation zu der zweiten Telekommunikationsvorrichtung.

**17.** Computerprogramm, das direkt in eine programmierbare Vorrichtung geladen werden kann, mit Anweisungen oder Teilbereichen eines Codes zum Implementieren der Schritte des Verfahrens nach den Ansprüchen 1 bis 9, wenn das Computerprogramm auf der programmierbaren Vorrichtung ausgeführt wird.

**18.** Computerprogramm, das direkt in eine programmierbare Vorrichtung geladen werden kann, mit Anweisungen oder Teilbereichen eines Codes zum Implementieren der Schritte des Verfahrens nach den Ansprüchen 10 bis 14, wenn das Computerprogramm auf der programmierbaren Vorrichtung ausgeführt wird.

**19.** Signal, das von einer ersten Telekommunikationsvorrichtung zu einer zweiten Telekommunikationsvorrichtung transferiert ist, **dadurch gekennzeichnet, dass** das Signal eine Anzahl von Information aufweist, die die Qualität der zwischen der ersten und der zweiten Telekommunikationsvorrichtung transferierten Signale darstellt, die die zweite Telekommunikationsvorrichtung als eine Kanalzustandsinformation zu der ersten Telekommunikationsvorrichtung zu berichten hat,

**Revendications**

**1.** Procédé pour contrôler des informations d'état du canal transférées par un premier dispositif de télécommunication ($20_1$, $20_K$) vers un second dispositif de télécommunication (10), le premier dispositif de télécommunication ($20_1$, $20_K$) déterminant des informations représentatives de la qualité des signaux transférés entre le premier et le second dispositifs de télécommunication, **caractérisé en ce que** le procédé comporte les étapes exécutées par le second dispositif de télécommunication (10) de ;

- détermination d'un nombre ($m_o(k)$) d'informations représentatives de la qualité des signaux transférés entre le premier et le second dispositifs de télécommunication que le premier dispositif de télécommunication doit rapporter comme une information d'état de canal,
- transfert du nombre déterminé au premier dispositif de télécommunication (S525, S607, S707, S807).

2. Procédé selon la revendication 1, **caractérisé en ce que** le nombre d'informations représentatives de la qualité des signaux transférés entre le premier et le second dispositifs de télécommunication que le premier dispositif de télécommunication doit rapporter est inférieur au nombre d'informations déterminées représentatives de la qualité des signaux transférés entre le premier et le second dispositifs de télécommunication.

3. Procédé selon la revendication 2, **caractérisé en ce que** le procédé comporte l'étape supplémentaire d'allocation au premier dispositif de télécommunication d'un nombre de signaux pilotes qui est égal au nombre déterminé.

4. Procédé selon l'une quelconque des revendications 1 à 3, **caractérisé en ce que** le procédé comporte les étapes supplémentaires de :

   - réception de l'information d'état du canal du premier dispositif de télécommunication,
   - contrôle du transfert des signaux représentatifs d'au moins un groupe de données entre le premier et le second dispositifs de télécommunication en fonction de l'information d'état du canal reçue.

5. Procédé selon la revendication 3 ou 4, **caractérisé en ce que** le procédé comporte l'étape supplémentaire de détermination du nombre de premiers dispositifs de télécommunication qui sont reliés au second dispositif de télécommunication.

6. Procédé selon la revendication 5, **caractérisé en ce que** le nombre d'informations représentatives de la qualité des signaux transférés entre le premier et le second dispositifs de télécommunication que le premier dispositif de télécommunication doit rapporter comme une information d'état du canal est déterminé (S500, S600, S700, S800) en fonction du nombre de premiers dispositifs de télécommunication qui sont reliés au second dispositif de télécommunication.

7. Procédé selon la revendication 5 ou 6, **caractérisé en ce que** le procédé comporte l'étape supplémentaire de réception du nombre d'antennes (S500, S600, S700, S800) que chaque premier dispositif de télécommunication comporte et **en ce que** le nombre d'informations représentatives de la qualité des signaux transférés entre le premier et le second dispositifs de télécommunication que le premier dispositif de télécommunication doit rapporter comme une information d'état du canal est déterminé en fonction du nombre d'antennes (MS1Ant1, MS1AntM, MSKAnt1, MSKAntM) que le premier dispositif de télécommunication comporte.

8. Procédé selon la revendication 5, **caractérisé en ce que** le procédé comporte l'étape supplémentaire de réception (S600) de chaque premier dispositif de télécommunication leur besoin respectif en termes de débit de données et **en ce que** le nombre d'informations représentatives de la qualité des signaux transférés entre le premier et le second dispositifs de télécommunication que le premier dispositif de télécommunication doit rapporter comme une information d'état du canal est déterminé en fonction des besoins respectifs en termes de débit de données.

9. Procédé selon la revendication 5, **caractérisé en ce que** le procédé comporte l'étape supplémentaire de réception (S700) de chaque premier dispositif de télécommunication leur besoin respectif en termes de délai de réponse et **en ce que** le nombre d'informations représentatives de la qualité des signaux transférés entre le premier et le second dispositifs de télécommunication que le premier dispositif de télécommunication doit rapporter comme une information d'état du canal est déterminé en fonction des besoins respectifs en termes de délai de réponse.

10. Procédé pour transférer, par un premier dispositif de télécommunication ($20_1$, $20_K$), une information d'état de canal (S906, S106, S112) à un second dispositif de télécommunication (10), le premier dispositif de télécommunication ($20_1$, $20_K$) déterminant des informations représentatives de la qualité des signaux transférés entre le premier et le second dispositifs de télécommunication, **caractérisé en ce que** le procédé comporte les étapes exécutées par le premier dispositif de télécommunication ($20_1$, $20_K$) de :

   - réception (S900, S100, S110) du second dispositif de télécommunication d'un nombre ($m_o(k)$) d'informations représentatives de la qualité des signaux transférés entre le premier et le second dispositifs de télécommunication que le premier dispositif de télécommunication doit rapporter comme une information d'état de canal,

- détermination d'une information d'état du canal (S906, S106, S112) qui comporte le nombre reçu d'informations représentatives de la qualité des signaux transférés entre le premier et le second dispositifs de télécommunication,

- transfert de l'information d'état du canal au second dispositif de télécommunication (S907, S107, S114).

11. Procédé selon la revendication 10, **caractérisé en ce que** le premier dispositif de télécommunication comporte des antennes et le second dispositif de télécommunication comporte des antennes et **en ce que** l'information représentative de la qualité des signaux transférés entre le premier et le second dispositifs de télécommunication est le gain de propagation entre une antenne de premier dispositifs de télécommunication et une antenne du second dispositif de télécommunication.

12. Procédé selon la revendication 10, **caractérisé en ce que** les gains de propagation sont des coefficients d'une matrice du canal descendant et les informations déterminées représentatives de la qualité des signaux transférés entre le premier et le second dispositifs de télécommunication comprises dans l'information d'état du canal sont déterminées en exécutant une décomposition en valeur singulière de la matrice du canal descendant (S903).

13. Procédé selon la revendication 12, **caractérisé en ce que** les gains de propagation sont des coefficients d'une matrice du canal montant et les informations déterminées représentatives de la qualité des signaux transférés entre le premier et le second dispositifs de télécommunication comprises dans l'information d'état du canal sont déterminées en exécutant une décomposition en valeur singulière de la matrice du canal montant (S103).

14. Procédé selon la revendication 10, **caractérisé en ce que** le premier dispositif de télécommunication comporte des antennes et **en ce que** l'information d'état du canal est représentative du rapport signal bruit plus interférence reçu par les antennes du premier dispositif de télécommunication (S112).

15. Dispositif pour contrôler des informations d'état du canal transférées par un premier dispositif de télécommunication ($20_1$, $20_K$) vers un second dispositif de télécommunication (10), le premier dispositif de télécommunication ($20_1$, $20_K$) déterminant des informations représentatives de la qualité des signaux transférés entre le premier et le second dispositifs de télécommunication, **caractérisé en ce que** le dispositif pour contrôler est inclus dans le second dispositif de télécommunication (10) et comporte :

- des moyens (10) de détermination d'un nombre d'informations représentatives de la qualité des signaux transférés entre le premier et le second dispositifs de télécommunication que le premier dispositif de télécommunication doit rapporter comme une information d'état de canal,
- des moyens (10) de transfert du nombre déterminé au premier dispositif de télécommunication.

16. Premier dispositif de télécommunication ($20_1$, $20_K$) qui transfère une information d'état de canal à un second dispositif de télécommunication (10), le premier dispositif de télécommunication ($20_1$, $20_K$) déterminant des informations représentatives de la qualité des signaux transférés entre le premier et le second dispositifs de télécommunication, **caractérisé** le premier dispositif de télécommunication ($20_1$, $20_K$) comporte :

- des moyens (205) de réception du second dispositif de télécommunication d'un nombre d'informations représentatives de la qualité des signaux transférés entre le premier et le second dispositifs de télécommunication que le premier dispositif de télécommunication doit rapporter comme une information d'état de canal,
- des moyens (205) de détermination d'une information d'état du canal qui comporte le nombre reçu d'informations représentatives de la qualité des signaux transférés entre le premier et le second dispositifs de télécommunication,
- des moyens (205) de transfert de l'information d'état du canal au second dispositif de télécommunication.

17. Programme d'ordinateur qui peut être chargé directement dans un dispositif programmable, comportant des instructions ou des portions de code pour implémenter le procédé selon les revendications 1 à 9, quand ledit programme d'ordinateur est exécuté par ledit dispositif programmable.

18. Programme d'ordinateur qui peut être chargé directement dans un dispositif programmable, comportant des instructions ou des portions de code pour implémenter le procédé selon les revendications 10 à 14, quand ledit programme d'ordinateur est exécuté par ledit dispositif programmable.

19. Signal transféré à un second dispositif de télécommunication par un premier dispositif de télécommunication, **ca-**

**ractérisé en ce que** le signal comporte un nombre d'informations représentatives de la qualité des signaux transférés entre le premier et le second dispositifs de télécommunication que le premier dispositif de télécommunication doit rapporter comme une information d'état de canal au premier dispositif de télécommunication.

Fig. 1

Fig. 2

MIMO
Channel matrix
Determination module
305

UL
Direction
control

$M_k$

Downlink
Linear transform

$m_0$

315

310

205

# Fig. 3a

MIMO
Channel matrix
Determination module
320

UL
Direction
control

$M_k$

Uplink
Linear transform

$m_0$

330

325

205

# Fig. 3b

Channel Estimation module ~340

M$_K$ ← UL Direction control

DL Direction control → M$_K$

350

345

205

Fig. 3c

10

400 Processor

403 RAM

Channel I/F 405

401

402 ROM

BSAnt1

BSAnt2

BSAntN

Fig. 4

Fig. 5

S600 — Get $K$, $M_k$ $DR(k)$

S601 — Initialize $m_0(1)$ to $m_0(K)$

S602 — List $m_0(k) < M_k$

S603 — List empty ?

S604 — Select largest $DR(k)/m_0(k)$

S605 — $m_0(k) = m_0(k) + 1$

S606 — $\sum_{k=1}^{K} m_0(k) < C$ ?

S607 — Transfer each $m_0(k)$

S608 — Transfer pilot signals

S609 — Receive CSI

S610 — Select device

Fig. 6

S700 — Get $K$, $M_k$, $DT(k)$

S701 — Initialize $m_0(1)$ to $m_0(K)$

S702 — List $m_0(k) < M_k$

S703 — List empty ?

S704 — Select smallest $DT(k)m_0(k)$

S705 — $m_0(k) = m_0(k) + 1$

S706 — $\sum_{k=1}^{K} m_0(k) < C ?$

S707 — Transfer each $m_0(k)$

S708 — Transfer pilot signals

S709 — Receive CSI

S710 — Select device

Fig. 7

S800 — Get $K$, $M_k$

S801 — Initialize $m_0(1)$ to $m_0(K)$

S802 — List $m_0(k) < M_k$

S803 — List empty ?

S804 — Select largest $Mk /m_0(k)$

S805 — $m_0(k) = m_0(k) + 1$

S806 — $\sum_{k=1}^{K} m_0(k) < C ?$

S807 — Transfer each $m_0(k)$

S808 — Transfer pilot signals

S809 — Receive CSI

S810 — Select device

Fig. 8

S900 — Receive $m_0(k)$

S901 — Receive pilot signals

S902 — Determine MIMO channel Downlink matrix

S903 — Decomposition

S904 — Select values

S905 — Determine $V_{DL}$

S906 — Determine CSI

S907 — Report

## Fig. 9

S100 — Receive $m_0(k)$

S101 — Receive pilot signals

S102 — Determine MIMO channel uplink matrix

S103 — Decomposition

S104 — Select values

S105 — Determine $V_{UL}$

S106 — Determine CSI

S107 — Report

## Fig. 10

S110

Receive $m_0(k)$

S111

Receive pilot signals

S112

Measure SINR

S113

Select values

S114

Report

Fig. 11

$m_0(k)$

| $n_1$ | CQI(1) |
| $n_2$ | CQI(2) |
| $n_2$ | CQI(3) |

Fig. 12

**REFERENCES CITED IN THE DESCRIPTION**

**Patent documents cited in the description**

- US 2005181739 A

- WO 2004073200 A